# EUROPEAN PATENT APPLICATION

(11) **EP 1 067 655 A1**
(43) Date of publication of application: **10.01.2001**
(21) Application number: 99305376.8
(22) Date of filing: 06.07.1999
(51) Int. Cl.: H02J 7/10

(54) **Temperature switch controlled charging circuit**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

The conventional automatic shut-off and transient state holding type charging circuit is comprised of numerous components, complicated structure with high cost and low reliability, wherein the temperature switch controlled automatic shut-off and transient state holding type charging circuit for applications in wide voltage variation range is disclosed that the transient state holding circuit for. applications in wide voltage range and the temperature control switch device for detecting temperature of the chargeable batteries are constituted by the operating conditions, whereby when the battery is charged to be saturated and when the battery temperature is raised to setting value, the temperature control switch is actuated which cause the circuit automatically switched to small current while maintaining the charging status before the temperature switch is automatically reset and within the setting power source voltage variation range, as well as that it is first characterized to have the reset function when the battery is removed or the power source is cutoff, and it is further characterized to install with return current diode to constitute the automatic emergency power supply function.

## Description

### BRIEF SUMMARY OF THE INVENTION

The conventional automatic shut-off and transient state holding type charging circuit is comprised of numerous components, complicated structure with high cost and low reliability, wherein the temperature switch controlled automatic shut-off and transient state holding type charging circuit for applications in wide voltage variation range is disclosed that the transient state holding circuit for applications in wide voltage range and the temperature control switch device for detecting temperature of the chargeable Batteries are constituted by the operating conditions, whereby when the battery is charged to be saturated and when the battery temperature is raised to setting value, the temperature control switch is actuated which cause the circuit automatically switched to small current while maintaining the charging status before the temperature switch is automatically reset and within the setting power source voltage variation range, as well as that it is first characterized to have the reset function when the battery is removed or the power source is cutoff, and it is further characterized to install with return current diode to constitute the automatic emergency power supply function.

### BRIEF DESCRIPTION OF THE DRAWINGS

Figure 1 is a circuit schematic diagram of the invention illustrating an automatic shut-off charging circuit constituted by a chargeable battery and its equipped temperature control switch.

Figure 2 is a circuit schematic diagram illustrating the circuit in figure 1 is further installed with a return current diode to provide automatic emergency power supply function.

### DETAILED DESCRIPTION OF THE INVENTION

As is well known, the conventional automatic shut-off and transient holding type charging circuit is through the voltage or current detector device constituted by electronic components to charge the chargeable battery installed with temperature switch, whereby through sensing by the temperature switch when the chargeable batter is saturated and the temperature is raised, the charger is switched to provide smaller current input to the battery for claimed functions; therein the conventional automatic shut-off and transient state holding type charging circuit has numerous components and complicated structure with a higher cost and low reliability, while The conventional automatic shut-off and transient state holding type charging circuit is comprised of numerous components, complicated structure with high cost and low reliability, while the temperature switch controlled automatic shut-off and transient state holding type charging circuit for applications in wide voltage variation range is disclosed that the transient state holding circuit for applications in wide voltage range and the temperature control switch device for detecting temperature of the chargeable batteries are constituted by the operating conditions, whereby when the battery is charged to be saturated and when the battery temperature is raised to setting value, the temperature control switch is actuated which cause the circuit automatically switched to small current while maintaining the charging status before the temperature switch is automatically reset and within the setting power source voltage variation range, as well as that it is first characterized to have the reset function when the battery is removed or the power source is cutoff, and it is further characterized to install with return current diode to constitute the automatic emergency power supply function.

The temperature switch controlled automatic shut-off and transient state holding type charging circuit for applications in wide voltage variation range is operated through the temperature switching device attached with the chargeable battery, and it is mainly comprised of the following:
- A charging power source: It is of the pure DC, semi-wave DC, full wave DC, sporadic pulsing DC or rippled wave DC power sources; whereof the charging power source can be a voltage stabilized power source or a variable power source within the setting voltage variation range;
- A chargeable battery: It is a chargeable/dis-chargeable secondary battery for matching with a temperature control switch;
- A transient state holding circuit for applications in wide voltage range: it is comprised of solid state electronic circuit components or electromechanical circuit components, whereby it is controlled by the temperature switch attached by the battery itself, and when the chargeable battery is charged to near saturation and temperature is raised, through the control of the temperature switching device, the thyristor SCR is tripped and is further through the bypass current-limiting circuit to limit the smaller topping charge current input to the chargeable battery whereby to constitute charging holding function, and the charging holding function of the transient state holding circuit is maintained within the wide voltage variation range for matching with the wide voltage range variations without interference until the power source is closed or that the chargeable battery is removed, to reset the transient state holding circuit.

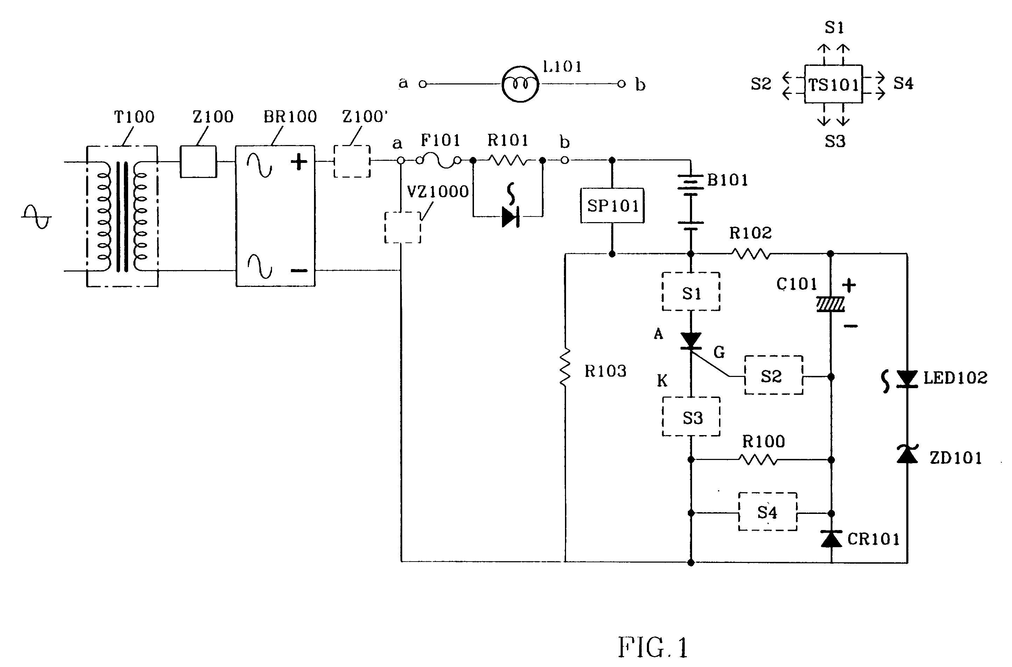

Applications for the invention is described according to the embodying example in figure 1 as following:
Figure 1 is an automatic shut-off charging circuit example which is constituted by the temperature switch controlled automatic shut-off and transient state holding type charging circuit combined with the chargeable battery and its attached temperature switching device for applications in wide voltage variation range, wherein it charging power source includes the pure DC, semi-wave DC, full wave DC, sporadic pulsing DC and rippled DC power sources; wherein the charging power source can be a stabilized power source or variable voltage power source within the setting voltage variation range, whereof the temperature switch controlled automatic shut-off and transient state holding type charging circuit for applications in wide voltage variation range is constituted by part or all of the circuit components listed below, and is mainly comprised of the following:
- An AC transformer T100: Its primary terminals are for receiving AC power input while its secondary terminals are for providing AC power output, wherein the AC transformer can be optionally installed or omitted for direct AC input according to circuit requirements;
- An AC current-limiting impedance Z100: It is a capacitive, or inductive, or resistive impedance component , or the mixed type AC current-limiting impedance device constituted by the aforesaid two or more than two impedances for preventing short-circuit at loading side and is series combined between the AC power source and the rectifier device BR100;
- A DC current-limiting impedance device Z100': It is an optional component, for a DC power source or an rectified AC power source to DC current and the AC current-limiting impedance Z100 is not series combined at the AC side, then the DC current-limiting impedance device constituted by the resistance, or active transistors and driving circuit is series combined between the DC power source and the loading side;
- A zener effect component VZ1000: it is a optionally selected component according to requirement, which is constituted by zener diode or group of bias diodes in current direction to provide voltage stabilizing functions;
- A chargeable battery B101: It is series combined with its matched temperature switch device TS101 and is then series combined with the thyristor SCR101 in current direction;
- A display and protector circuit: The current-limiting resistor R101 can be optionally installed between the battery B101 and the charging power source to parallel combine with the light-emitting diode LED101 to constitute the display function and is further series combined with an overload protector component F101, whereby to series combine with the chargeable battery B101, the anode A and cathode K of the thyristor SCR101 in current direction leading to the charging power; wherein the aforesaid current-limiting resistor R101, the light-emitting diode LED101, and the overload protector component F101 can also be replaced by fuse type light bulb L101;
- An surplus voltage and surge voltage protector component SP101: It is the optionally installed auxiliary component according to requirement, wherein it is constituted by solid state surplus voltage or surge voltage protector component and is optionally installed to parallel combine between the power source terminals, or is series combined between the output side of the circuit protector component and another pole of the power source according to requirement, or for parallel combination between the two ends of the chargeable battery;
- A distributed voltage resistor R102 is series combined with the trigger capacitor C101, one terminal of the distributed voltage resistor R102 is combined with the negative pole of the chargeable battery 3101, while another end of the capacitor C101 is connected to the trigger gate G of the thyristor SCR101, and anode of the thyristor SCR101 is connected to the negative pole of the battery, wherein a parallel combined distributed current resistor R100 can be optionally installed between the gate G and cathode K of the thyristor according to requirement, thereby to adjust the stability of the gate current and the trigger sensibility;
- A temperature switching device TS101: It is constituted by electromechanical type thermostatic switch or solid state temperature detector component and its matching switching circuit, wherein the solid state detector component includes: the constitution by the positive temperature coefficient (PTC) or negative temperature coefficient components or thermocouples, whereof the aforesaid electromechanical type thermostatic switching components or the switch circuit controlled by the solid state temperature detector component are installed :
   1) S1: Between anode A of SCR101 and the negative terminal of the chargeable battery B101
   2) S2: Between the gate G of SCR101 and the trigger power source
   3) S3: The cathode K of SCR101
   4) S4: Between the gate G and Cathode K of SCR101, whereby when the chargeable battery reaches set temperature, the operation is shut-off, wherein the installation at S1, S2, S3 is to provide overheat cut-off switching function, and the installation at S4 is to provide overheat closing switching function;
- A display light-emitting diode LED102 and the zener diode ZD101 which is series combined with LED102 constitute the voltage-limiting and distributed current function, whereby it is parallel combined with the junction point between the distributed voltage resistor R102 and capacitor C101 as well as the negative terminal of charging power source to produce voltage-limiting and bypass distributed current function, whereby its voltage-limiting function is employed to oppress the interference on the capacitor end voltage due to power source voltage variation, while the current passing through ZD101 (or the light-emitting diode LED102 which is further optionally installed to series combine with ZD101) is also used for topping charge to the battery B101 after the thyristor SCR101 is shut-off;
- A bypass distributed current resistor R103: It is the discharge resistor for capacitor C101 when the power is switched off or when the chargeable battery is removed, wherein if the required topping charge current is larger, a parallel combined distributed current resistor between the "X" point and the negative terminal of the power source can be further optionally installed to relatively increase the holding charging current value;
- A discharge diode CR101: It is parallel combined between the cathode K and gate G of the thyristor SCR101, wherein its polarity provides that the capacitor C101 is through the bypass distributed current resistor R103 and aforesaid diode CR101 to constitute discharge circuit when the battery B101 is removed.

The circuit action steps is described in figure 1:
- When the battery is charged at the beginning, the gate G of the thyristor is triggered by the instant charging current through R102 to the capacitor C101 to trigger the SCR101 to allow the circuit charge the battery B101 at normal charging current value, then the battery B01 reaches near saturation to raise the temperature which activates the matched temperature switching device TS101 to cut-off the current to the thyristor SCR101, hereby the combined end voltage between the charging current passing through the bypass distributed current resistor R103, and the charging current passing through the distributed voltage resistor R102 and zener diode ZD101 (and the optionally series combined light-emitting diode LED102)are the same and are not affected by the power source voltage variations;
- When the temperature switch TS101 is reset, if the power source voltage is varied within the setting range either in topping charge period or reset period, the voltage level of the capacitor C101 remains unchanged, whereby no current is through the thyristor SCR101 to trigger the gate G, and the thyristor SCR101 remains at open-circuit status; when the charging is completed and the battery B101 is removed, the accumulated power at capacitor C101 is then discharged through the distributed current resistor R103 and discharge diode CR101, thereby to reset the circuit back to the trigger prepared status.

Besides, the aforesaid embodying example can be further installed with a return current diode FD201, whereby the chargeable battery can provide power through the return current diode to the load originally driven by the positive and negative terminal of the DC power source when the power source is cut-off.

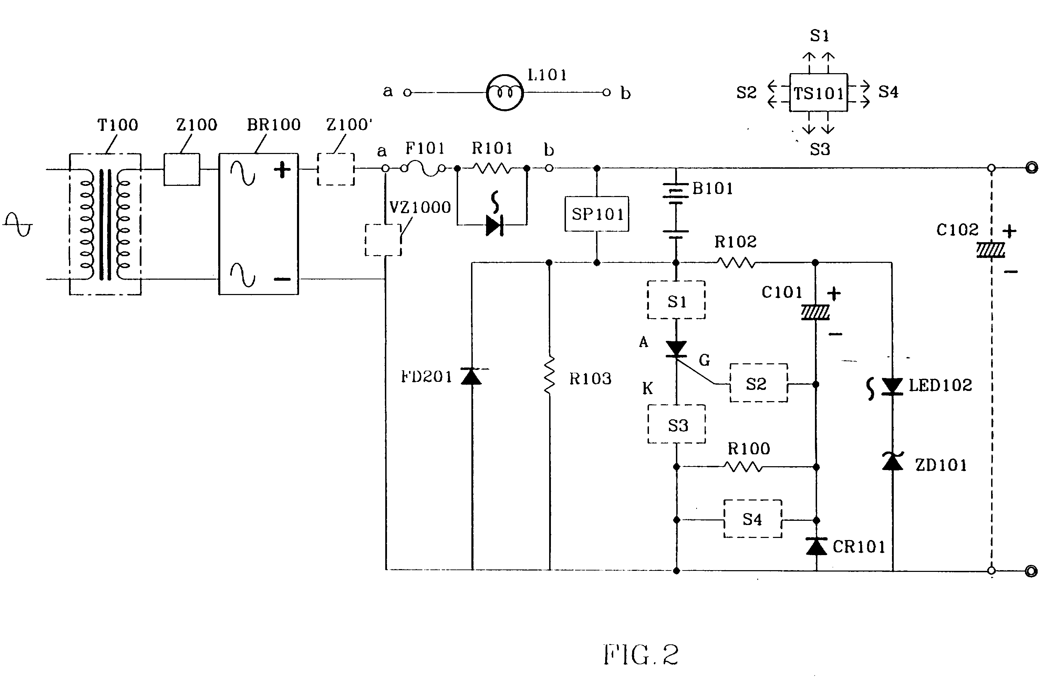

Figure 2 is a circuit example illustrating the circuit in figure 1 is further installed with a return current diode to provide automatic emergency power supply function, wherein it is mainly comprised of the following:
- A return current diode FD201: It is parallel combined between the negative terminal of the chargeable battery B101 and the negative terminal of the DC power source in reverse current direction;
- A load: It is parallel combined between the positive terminal of the chargeable battery B101 and negative terminal of the power source, wherein in normal condition, the load is driven by the power source while when the current is cut-off, the return current diode FD201 constitutes a circuit;
- A stabilized capacitor C101: It is parallel combined with the load to stabilize the switching process, whereof the capacity value of the capacitor can be optionally selected or the capacitor can be omitted.

For the embodying examples illustrated in figures 1 and 2, the following applications can be selected without changing the circuit principles:
1) The polarities and series combining relationships of the components are arranged according to requirements to match with the polarity relationships between the circuit and power source;
2) The negative terminal of the chargeable battery B101 can be selected to connect with the negative terminal of the power source while to let the anode A of the thyristor SCR101 to connect to the positive terminal of the power source; or the cathode K of the thyristor SCR101 is connected to the negative terminal of the power source while to let the positive terminal of the battery B101 to connect to the positive terminal of the power source;
3) The charging circuit components (including the temperature detector device TS101)can be assembled to the charger according to requirement, or the charging circuit components and the chargeable battery can be assembled together or part of the circuit components are installed in the charger while the other components are installed in the chargeable battery, and they are mutually connected through the electric conductor junction devices or junction points or plugs and receptacles;

As summarized, the design discloses a temperature switch controlled automatic shut-off and transient state holding type charging circuit for application in wide voltage variation range, i.e. the temperature switching device attached with the chargeable battery detects the charging saturation and temperature rising status of the battery for operating conditions to constitute the automatic shut-off charging circuit, thereby it is characterized in that when the battery is charged to saturation, it is automatically switched to topping charge status whereby to oppress the interference to the capacitor end voltage due to power source voltage variations, while the current through the distributed'voltage resistor R102 and the current through the zener diode ZD101 (and the optionally series combined light-emitting diode LED102) are used for topping charge to the battery, and it is further characterized to have the return current diode thereby to constitute the emergency automatic power supply circuit functions, thereof as its structure is simple and practically useful, your lawful approval is greatly appreciated.

## Claims

1. A temperature switch controlled automatic shut-off and transient state holding type charging circuit for applications in wide voltage variation range is disclosed that the transient state holding circuit for applications in wide voltage range and the temperature control switch device for detecting temperature of the chargeable batteries are constituted by the operating conditions, whereby when the battery is charged to be saturated and when the battery temperature is raised to setting value, the temperature control switch is actuated which cause the circuit automatically switched to small current while maintaining the charging status before the temperature switch is automatically reset and within the setting power source voltage variation range, as well as that it is first characterized to have the reset function when the battery is removed or the power source is cutoff, and it is further characterized to install with return current diode to constitute the automatic emergency power supply function.

2. The temperature switch controlled automatic shut-off and transient state holding type charging circuit for applications in wide voltage variation range as in claim 1, wherein it is operated through the temperature switching device attached with the chargeable battery, and it is mainly comprised of the following:
• A charging power source: It is of the pure DC, semi-wave DC, full wave DC, sporadic pulsing DC or rippled wave DC power sources; whereof the charging power source can be a voltage stabilized power source or a variable power source within the setting voltage variation range;
• A chargeable battery: It is a chargeable/dis-chargeable secondary battery for matching with a temperature control switch;
• A transient state holding circuit for applications in wide voltage range: it is comprised of solid state electronic circuit components or electromechanical circuit components, whereby it is controlled by the temperature switch attached by the battery itself, and when the chargeable battery is charged to near saturation and temperature is raised, through the control of the temperature switching device, the thyristor SCR is tripped and is further through the bypass current-limiting circuit to limit the smaller topping charge current input to the chargeable battery whereby to constitute charging holding function, and the charging holding function of the transient state holding circuit is maintained within the wide voltage variation range for matching with the wide voltage range variations without interference until the power source is closed or that the chargeable battery is removed, to reset the transient state holding circuit.

3. The temperature switch controlled automatic shut-off and transient state holding type charging circuit combined with the chargeable battery and its attached temperature switching device for applications in wide voltage variation range as in claims 1 and 2, wherein it is constituted by part or all of the circuit components listed below, and is mainly comprised of the following:
• An AC transformer T100: Its primary terminals are for receiving AC power input while its secondary terminals are for providing AC power output, wherein the AC transformer can be optionally installed or omitted for direct AC input according to circuit requirements;
• An AC current-limiting impedance Z100: It is a capacitive, or inductive, or resistive impedance component , or the mixed type AC current-limiting impedance device constituted by the aforesaid two or more than two impedances for preventing short-circuit at loading side and is series combined between the AC power source and the rectifier device BR100;
• A DC current-limiting impedance device Z100': It is an optional component, for a DC power source or an rectified AC power source to DC current and the AC current-limiting impedance Z100 is not series combined at the AC side, then the DC current-limiting impedance device constituted by the resistance, or active transistors and driving circuit is series combined between the DC power source and the loading side;
• A zener effect component VZ1000: it is a optionally selected component according to requirement, which is constituted by zener diode or group of bias diodes in current direction to provide voltage stabilizing functions;
• A chargeable battery B101: It is series combined with its matched temperature switch device TS101 and is then series combined with the thyristor SCR101 in current direction;
• A display and protector circuit: The current-limiting resistor R101 can be optionally installed between the battery B101 and the charging power source to parallel combine with the light-emitting diode LED101 to constitute the display function and is further series combined with an overload protector component F101, whereby to series combine with the chargeable battery B101, the anode A and cathode K of the thyristor SCR101 in current direction leading to the charging power; wherein the aforesaid current-limiting resistor R101, the light-emitting diode · LED101, and the overload protector component F101 can also be replaced by fuse type light bulb L101;
• An surplus voltage and surge voltage protector component SP101: It is the optionally installed auxiliary component according to requirement, wherein it is constituted by solid state surplus voltage or surge voltage protector component and is optionally installed to parallel combine between the power source terminals, or is series combined between the output side of the circuit protector component and another pole of the power source according to requirement, or for parallel combination between the two ends of the chargeable battery;
• A distributed voltage resistor R102 is series combined with the trigger capacitor C101, one terminal of the distributed voltage resistor R102 is combined with the negative pole of the chargeable battery B101, while another end of the capacitor C101 is connected to the trigger gate G of the thyristor SCR101, and anode of the thyristor SCR101 is connected to the negative pole of the battery, wherein a parallel combined distributed current resistor R100 can be optionally installed between the gate G and cathode K of the thyristor according to requirement, thereby to adjust the stability of the gate current and the trigger sensibility;
• A temperature switching device TS101: It is constituted by electromechanical type thermostatic switch or solid state temperature detector component and its matching switching circuit, wherein the solid state detector component includes: the constitution by the positive temperature coefficient (PTC) or negative temperature coefficient components or thermocouples, whereof the aforesaid electromechanical type thermostatic switching components or the switch circuit controlled by the solid state temperature detector component are installed :
1) S1: Between anode A of SCR101 and the negative terminal of the chargeable battery B101
2) S2: Between the gate G of SCR101 and the trigger power source
3) S3: The cathode K of SCR101
4) S4: Between the gate G and Cathode K of SCR101, whereby when the chargeable battery reaches set temperature, the operation is shut-off, wherein the installation at S1, S2, S3 is to provide overheat cut-off switching function, and the installation at S4 is to provide overheat closing switching function;
• A display light-emitting diode LED102 and the zener diode ZD101 which is series combined with LED102 constitute the voltage-limiting and distributed current function, whereby it is parallel combined with the junction point between the distributed voltage resistor R102 and capacitor C101 as well as the negative terminal of charging power source to produce voltage-limiting and bypass distributed current function, whereby its voltage-limiting function is employed to oppress the interference on the capacitor end voltage due to power source voltage variation, while the current passing through ZD101 (or the light-emitting diode LED102 which is further optionally installed to series combine with ZD101) is also used for topping charge to the battery B101 after the thyristor SCR101 is shut-off;
• A bypass distributed current resistor R103: It is the discharge resistor for capacitor C101 when the power is switched off or when the chargeable battery is removed, wherein if the required topping charge current is larger, a parallel combined distributed current resistor between the "X" point and the negative terminal of the power source can be further optionally installed to relatively increase the holding charging current value;
• A discharge diode CR101: It is parallel combined between the cathode K and gate G of the thyristor SCR101, wherein its polarity provides that the capacitor C101 is through the bypass distributed current resistor R103 and aforesaid diode CR101 to constitute discharge circuit when the battery B101 is removed.

4. The temperature switch controlled automatic shut-off and transient state holding type charging circuit for application in wide voltage variation range as in claim 1, wherein it can be further installed with a return current diode FD201, whereby the chargeable battery can provide power through the return current diode to the load originally driven by the positive and negative terminal of the DC power source when the power source is cut-off, and it is mainly comprised of the following:
• A return current diode FD201: It is parallel combined between the negative terminal of the chargeable battery B101 and the negative terminal of the DC power source in reverse current direction;
• A load: It is parallel combined between the positive terminal of the chargeable battery B101 and negative terminal of the power source, wherein in normal condition, the load is driven by the power source while when the current is cut-off, the return current diode FD201 constitutes a circuit;
• A stabilized capacitor C101: It is parallel combined with the load to stabilize the switching process, whereof the capacity value of the capacitor can be optionally selected or the capacitor can be omitted.

5. The temperature switch controlled automatic shut-off and transient state holding type charging circuit for application in wide voltage variation range as in claims 1, 2, 3 or 4, wherein the charging circuit components (including the temperature detector device TS101)can be assembled to the charger according to requirement, or the charging circuit components and the chargeable battery can be assembled together or part of the circuit components are installed in the charger while the other components are installed in the chargeable battery, and they are mutually connected through the electric conductor junction devices or junction points or plugs and receptacles.

6. The temperature switching device TS101 as in claims 1,2,3,4 is constituted by electromechanical type thermostatic switch or solid state temperature detector component and its matching switching circuit, wherein the solid state detector component includes: the constitution by the positive temperature coefficient (PTC) or negative temperature coefficient components or thermocouples, whereof the aforesaid electromechanical type thermostatic switching components or the switch circuit controlled by the solid state temperature detector component are installed :
1) S1: Between anode A of SCR101 and the negative terminal of the chargeable battery B101
2) S2: Between the gate G of SCR101 and the trigger power source
3) S3: The cathode K of SCR101
4) S4: Between the gate G and Cathode K of SCR101, whereby when the chargeable battery reaches set temperature, the operation is shut-off, wherein the installation at S1, S2, S3 is to provide overheat cut-off switching function, and the installation at S4 is to provide overheat closing switching function.

7. For the temperature switch controlled automatic shut-off and transient state holding type charging circuit for application in wide voltage variation range as in claims 1,2,3 or 4, herein the following applications can be selected without changing the circuit principles:
1) The polarities and series combining relationships of the components are arranged according to requirements to match with the polarity relationships between the circuit and power source;
2) The negative terminal of the chargeable battery B101 can be selected to connect with the negative terminal of the power source while to let the anode A of the thyristor SCR101 to connect to the positive terminal of the power source; or the cathode K of the thyristor SCR101 is connected to the negative terminal of the power source while to let the positive terminal of the battery B101 to connect to the positive terminal of the power source;
3) The charging circuit components (including the temperature detector device TS101)can be assembled to the charger according to requirement, or the charging circuit components and the chargeable battery can be assembled together or part of the circuit components are installed in the charger while the other components are installed in the chargeable battery, and they are mutually connected through the electric conductor junction devices or junction points or plugs and receptacles.
